# EUROPEAN PATENT APPLICATION

(11) **EP 1 832 801 A2**
(43) Date of publication of application: **12.09.2007**
(21) Application number: 06077052.6
(22) Date of filing: 20.11.2006
(51) Int. Cl.: F16M 11/24, F16M 11/18

(54) **Supporting device for display units**

(30) Priority: 06.03.2006 KR 20060021012
(71) Applicant: Samsung Electronics Co., Ltd., Suwon-si Gyeonggi-do (KR)
(72) Inventor: Jung, Jun Su, 107-1801, Hwanggolmaeul 1st. Apt., Suwon-si Gyeonggi-do (KR)
(74) Representative: Hylarides, Paul Jacques

(57) **Abstract**

A supporting device for display units enables height adjustment with ease and accuracy, and stably maintains the adjusted height while allowing a plurality of display units to be mounted thereon. The supporting device includes a stationary member (10), an elevation member (20) coupled to the stationary member (10) so as to be raised or lowered, a rack gear (41) secured to the stationary member (10), a pinion gear (42) installed to the elevation member (20) so as to engage with the rack gear (41), and a restriction unit (50) installed to the elevation member (20) to restrict or allow rotation of the pinion gear (42). The supporting device further comprises an upper-side supporting member (60) installed to an upper portion of the elevation member (20), first and second movable members (71,72) to move along a guide rail of the upper-side supporting member (60), and connecting devices (80) installed to the respective movable members to connect the display unit, respectively.

## Description

### BACKGROUND OF THE INVENTION

### 1. Field of the Invention

The present invention relates to a supporting device for display units, and, more particularly, to a supporting device for display units, which can adjust a height of the display unit with accuracy, maintain the adjusted height thereof with stability, and allows display units having different weights to be selectively mounted thereon.

### 2. Description of the Related Art

Generally, a display unit such as a liquid crystal display and a plasma display panel is supported by a supporting device, which can stably support the panel, and allow adjustment in height of the panel. One example of such a supporting device is disclosed in Korean Utility Model Registration No. 20-361843.

The supporting device disclosed in the publication comprises a stand body secured in a state of standing upright to a stand base, and an elevation support body coupled to the stand body so as to be raised or lowered with a display unit mounted thereon. The elevation support body is supported by a spiral spring, which is installed to the stand body to provide lifting force acting against the weight of the display unit. The spiral spring is set to have elasticity (restoring force) balanced with the weight of the display unit. Accordingly, the supporting device is designed to allow the elevation support body to be stopped at a location to which the display unit is lowered and at a location to which the display unit is lifted.

However, since the elasticity of the spiral spring of the supporting device is predetermined, there is a problem in that, if other display units having different weights from that of a standard display unit are mounted on the supporting device, equilibrium between the elasticity of the spiral spring and the weight of the display unit is disrupted, causing the supporting device not to exhibit the height adjustment function. In other words, if a display unit heavier than the standard display unit is mounted on the supporting device, the elevation support body is lowered, whereas if a display unit lighter than the standard display unit is mounted thereon, the elevation support body is lifted, so that the supporting device fails to exhibit the height adjustment function. As a result, the supporting device cannot be commonly used for the display units having different weights.

Korean Patent Laid-open Publication No. 2005-0066256 discloses a height adjustable stand for a display unit, which can adjust the height of the display unit, and then maintain the adjusted height thereof. However, such a supporting device has a problem in that, since fixing grooves are separated a great distance from each other on a side surface of a fixing part, and since height adjustment positions are restricted to locations of the fixing grooves, adjustment in height of the display unit cannot be performed with accuracy.

Korean Utility Model Registration No. 20-388004 discloses a stand for display units, which enables a plurality of display units to be simultaneously mounted in a limited space. However, since it is necessary, for use of the stand, to fasten or release fastening screws or nuts whenever installation angles of the display units or separation distances therebetween are adjusted, the stand has a difficulty in adjustment of the installation angles and the separation distances therebetween. Accordingly, it is inconvenient to use such a stand in such a case where the adjustment in distance between the display units is frequently required.

### SUMMARY OF THE INVENTION

Accordingly, it is an aspect of the present invention to provide a supporting device for display units, which enables adjustment in height of a display unit with ease and accuracy, and stably maintains the adjusted height of the display unit while allowing display units having different weight to be selectively mounted thereon.

It is another aspect of the present invention to provide the supporting device, which allows a plurality of display units to be used in a mounted state thereon, and enables easy adjustment of distance and installation angle between the display units.

Additional aspects and/or advantages of the invention will be set forth in part in the description which follows and, in part, will be apparent from the description, or may be learned by practice of the invention.

The foregoing and other aspects of the present invention are achieved by providing a supporting device for display units, comprising a stationary member secured to a base, and an elevation member coupled to the stationary member so as to be raised or lowered to support the display unit and adjust a height thereof, the supporting device further comprising: a rack gear secured to the stationary member; a pinion gear disposed on the elevation member so as to engage with the rack gear; and a restriction unit disposed on the elevation member to restrict or allow rotation of the pinion gear.

The restriction unit may comprise a lever coupled to the elevation member and having a gear part to restrict the pinion gear, an operating part positioned opposite to the gear part of the lever, and an elastic member to press the lever to cause the gear part of the lever to operate in a direction of restricting the pinion gear.

The lever may be installed such that, when pressing the operating part, the gear part is separated from the pinion gear.

The supporting device may further comprise a lift spring installed between the stationary member and the elevation member to impart lifting force to the elevation member.

The lift spring may comprise a spiral spring having one end secured to the stationary member, and the elevation member may be provided with a spring latching member to allow the spiral spring to be wound or unwound according to a lifting or lowering behavior of the elevation member.

The supporting device may further comprise: an upper-side supporting member mounted to an upper portion of the elevation member and extending in a horizontal direction; a guide rail extending in a longitudinal direction on the upper-side supporting member; first and second movable members positioned at both sides of the upper-side supporting member to move along the guide rail, respectively; and connecting devices, each having a hinging part and a rotating part to adjust an installation angle of the display unit, installed to the first and second movable members, respectively.

Each of the connecting devices may comprise a first connecting member connected with an associated one of the first and second movable members so as to be hinged left and right to obtain a swivel function, a second connecting member connected with the first connecting member so as to be hinged up and down to obtain a tilting function, and a third connecting member rotatably connected with the second connecting member to obtain a pivot function.

In accordance with another aspect of the present invention, a supporting device for display units is provided, comprising a stationary member secured to a base, and an elevation member coupled to the stationary member so as to be raised or lowered to support the display unit and adjust a height thereof, wherein the supporting device further comprises: a rack gear secured to the elevation member; a pinion gear disposed on the stationary member so as to engage with the rack gear; and a restriction unit disposed on the stationary member to restrict or allow rotation of the pinion gear.

The restriction unit may comprise: a lever coupled to the stationary member and having a gear part to restrict the pinion gear; an operating part positioned opposite to the gear part of the lever; and an elastic member to press the lever to cause the gear part of the lever to operate in a direction of restricting the pinion gear.

### BRIEF DESCRIPTION OF THE DRAWINGS

These and/or other aspects and advantages of the invention will become apparent and more readily appreciated from the following description of the exemplary embodiments, taken in conjunction with the accompanying drawings, of which:
FIG. 1 is a perspective view illustrating the construction of a supporting device for display units in accordance with one embodiment of the present invention;
FIG. 2 is an exploded perspective view illustrating one embodiment of a height adjustor of the supporting device in accordance with the present invention;
FIG. 3 is a cross-sectional view illustrating the height adjustor of the supporting device, in which an elevation member is in a secured state;
FIG. 4 is a cross-sectional view illustrating the height adjustor of the supporting device in which the elevation member is in a lifting state;
FIG. 5 is a cross-sectional view illustrating another embodiment of a height adjustor of the supporting device for the display unit in accordance with the present invention;
FIG. 6 is an exploded perspective view illustrating details of an upper-side supporting member and a connecting device of the supporting device;
FIGS. 7 and 8 are views illustrating using states of the supporting device for the display unit via a pivot function and a distance adjustment function thereof; and
FIG. 9 is a perspective view illustrating a supporting device for display units in accordance with another embodiment of the present invention.

### DETAILED DESCRIPTION OF THE EXEMPLARY EMBODIMENTS

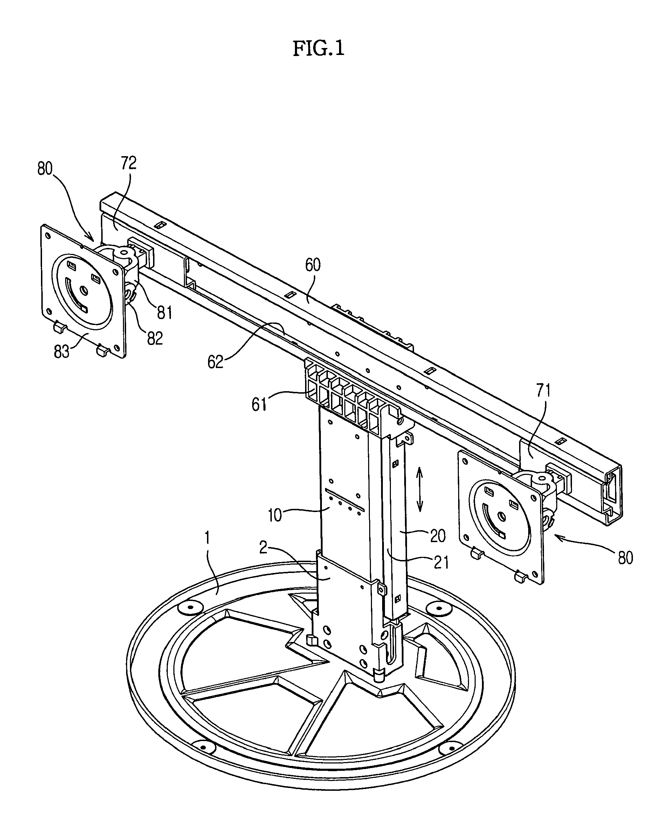

Reference will now be made in detail to the exemplary embodiments of the present invention, examples of which are illustrated in the accompanying drawings, wherein like reference numerals refer to the like elements throughout the drawings. The embodiments are described below to explain the present invention by referring to the figures. Referring to FIG. 1, a supporting device for display units according to the present invention comprises a stationary member 10 secured to a base 1, and an elevation member 20 coupled to the stationary member 10 so as to be lifted or lowered for height adjustment. In addition, the supporting device comprises an upper-side supporting member 60 installed to an upper side of the elevation member 20 to mount a plurality of display units, first and second movable members 71 and 72 installed at both sides of the upper-side supporting member 60 so as to move in a transverse direction, and connecting devices 80 installed to the respective movable members 71 and 72 to connect the display units.

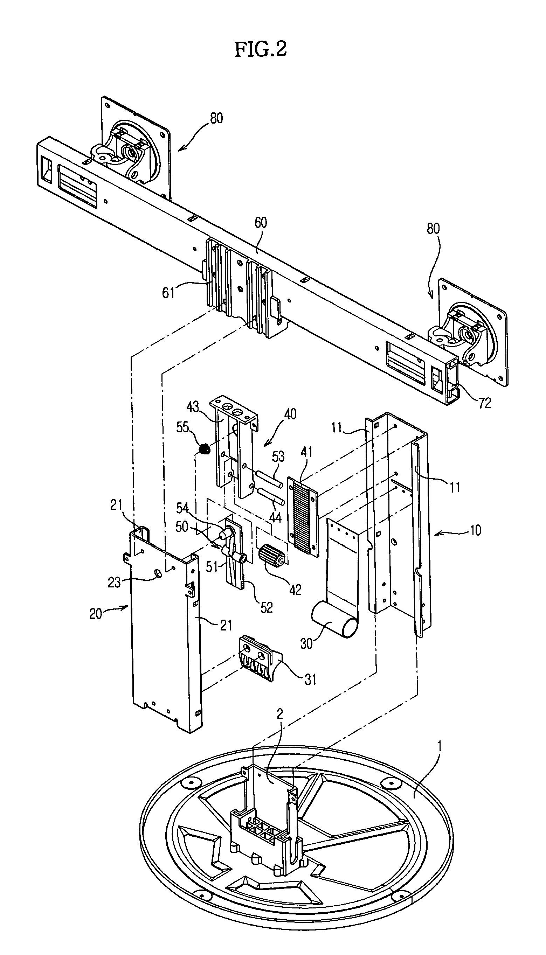

As shown in FIGS. 1 and 2, the stationary member 10 stands upright, and has a lower end secured to an upper surface of the base 1 via a lower-side connecting member 2. The lower-side connecting member 2 is fastened to the base 1 and the stationary member 10 via fastening screws. Herein, although the stationary member 10 is illustrated as being secured to the base 1 through the lower-side connecting member 2, the stationary member 10 can be secured directly to the base 1 via fastening screws or welding.

As shown in FIG. 2, the stationary member 10 extends in the vertical direction, and is provided at either side with a first rail 11 which guides lifting or lowering of the elevation member 20 after being coupled to the elevation member 20. The elevation member 20 also extends in the vertical direction like the stationary member 10, and is provided at either side with a second rail 21 which is correspondingly coupled to the first rail 11 of the stationary member 10. The first and second rails 11 and 21 can be coupled to each other so as to slide with respect to each other. In this regard, although not shown in the drawings, the first and second rails 11 and 21 are coupled to each other via a plurality of balls or rollers in order to ensure a smooth lifting and lowering behavior of the elevation member 20.

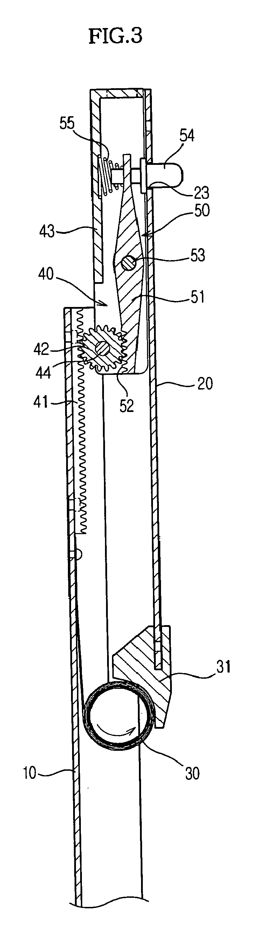

A lift spring 30 is installed in a space between the stationary member 10 and the elevation member 20 to impart lifting force to the elevation member 20, as shown in FIGS. 2 and 3. The lift spring 30 comprises a spiral spring which is secured at its one end to an inner surface of the stationary member 10 and has elasticity to wind upwardly. The elevation member 20 is provided with a spring latching member 31 which is latched to a winding portion of the lift spring 30 such that the lift spring 30 is wound or unwound according to the lifting or lowering behavior of the elevation member 20. Accordingly, the lift spring 30 tends to push the spring latching member 31 upward, thereby imparting the lifting force to the elevation member 20. Here, although the spiral spring is provided as one example of the lift spring 30, it should be noted that the lift spring 30 is not limited to this construction. As for the lift spring, a tension coil spring or a compression coil spring which can impart the lifting force to the elevation member 20 may be employed.

The elasticity (restoring force) of the lift spring 30 imparts the lifting force to the elevation member 20 so that, even when a load of a display unit is applied to the elevation member 20, the height of the display unit can be easily adjusted by a user. Accordingly, it is desirable to set the elasticity of the lift spring 30 such that a lowering force of the elevation member 20 caused by the weight of the display unit is balanced with the elasticity of the lift spring 30.

A height adjustor 40 is positioned in an upper space between the stationary member 10 and the elevation member 20 to adjust the height of the elevation member 20. As shown in FIGS. 2 and 3, the height adjustor 40 comprises a rack gear 41 secured to the inner surface of the stationary member 10 and extending in the vertical direction, a pinion gear 42 installed to the elevation member 20 so as to engage with the rack gear 41, a restriction unit 50 installed to the elevation member 20 to restrict or allow rotation of the pinion gear 42, and a support bracket 43 secured to the inner surface of the elevation member 20 for installation of the pinion gear 42 and the restriction unit 50.

The support bracket 43 is secured to the inner surface of the elevation member 20 via welding, fastening screws, and the like. The pinion gear 42 is rotatably coupled to a lower end of the support bracket 43 via a coupling pin 44 such that teeth of the pinion gear 42 engage with the rack gear 41. Accordingly, the pinion gear 42 moves and rotates up or down along the rack gear 41 when the elevation member 20 is lifted or lowered.

The restriction unit 50 serves to restrict the pinion gear 42, and comprises a lever 51, which is coupled at the center to the support bracket 43 via a coupling pin 53 so as to move like a seesaw and has a gear part 52 to engage with the pinion gear 42, an operating part 54 positioned opposite to the gear part 52 of the lever 51, and an elastic member 55 to press the operating part 54 of the lever 51 to cause the gear part 52 of lever 51 to operate in a direction of restricting the pinion gear 42. As shown in FIG. 3, the operating part 54 is protruded outwardly at the rear side of the elevation member 20 through a hole 23 formed in the elevation member 20. The elastic member 55 forces the end of the lever 51 at a side of the operating part 54 within the support bracket 43 to be protruded to the outside. It should be noted that, without being limited to this construction, the elastic member 55 may be realized by a torsion spring installed at a portion to which the coupling pin 53 of the lever 51 is mounted.

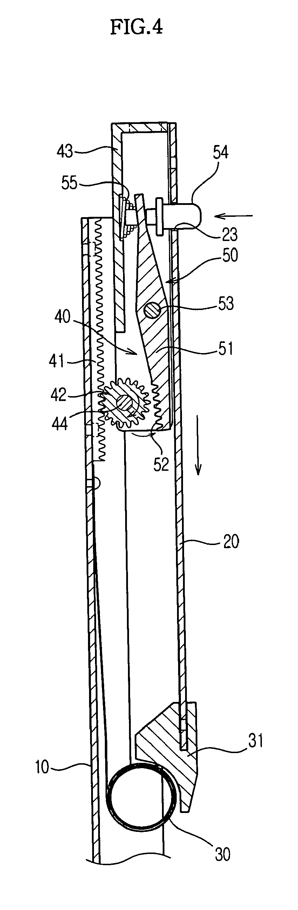

When the operating part 54 is pushed by the user, the gear part 52 is separated from the pinion gear 42, the restriction unit 50 releases the pinion gear 42, as shown in FIG. 4. In addition, when the operating part 54 is released by the user, the lever 51 is rotated by the elasticity of the elastic member 55, causing the gear part 52 to engage and restrict the pinion gear 42.

Accordingly, if the user wants to move the elevation member 20 up or down for the height adjustment of the display unit, the elevation member 20 is lifted or lowered, with the restriction of the gear part 52 on the pinion gear 42 released by pushing the operating part 54. Then, if the user wants to fix the height of the elevation member 20 after suitably adjusting the height of the display unit, the operating part 54 is released to force the gear part 52 to restrict the pinion gear 42. When the pinion gear 42 is restricted, rotation of the pinion gear 42 is restricted, and prevents the elevation member 20 from being lifted. Thus, it is possible to maintain a fixed state of the elevation member 20 with stability after the height adjustment.

Since the height adjustor 40 has the structure wherein the pinion gear 42 moves and rotates along the rack gear 41 during the height adjustment of the elevation member 20, the height adjustment of the elevation member 20 can be easily performed. Furthermore, since it is possible to restrict the pinion gear 42 at any desired position when fixing the elevation member 20 after the height adjustment, the height of the elevation member 20 can be accurately adjusted. In particular, more accurate height adjustment can be realized by decreasing a pitch of the rack gear 41, the pinion gear 42, and the gear part of the lever 52.

In addition, since the supporting device for the display unit consistent with the present invention can secure the elevation member 20 by means of the restriction unit 50 after the height adjustment, it is possible to maintain the adjusted height with stability even in the case where a display unit heavier or lighter than the standard display unit is mounted on the supporting device according to needs of the user. In other words, in the case where a display unit that is heavier than the standard display unit is mounted on the supporting device, the load of the display unit applied to the elevation member 20 is greater than the elasticity of the lift spring 30, causing the elevation member 20 to be lowered. However, even in this case, since the elevation member 20 is forcibly restricted by means of the restriction unit 50, it is possible to stably maintain the adjusted height of the elevation member 20. Likewise, in the case where the display unit lighter than the standard display unit is mounted on the supporting device, since the elevation member 20 can be restricted, it is possible to stably maintain the adjusted height of the elevation member 20.

Accordingly, since the supporting device of the present invention can adjust the height of the elevation member 20 irrespective of the load applied to the elevation member 20; that is, the number or the weights of the display units directly or indirectly mounted on the elevation member 20, and can maintain the adjusted height of the elevation member 20 via restriction of the pinion gear 42 after the height adjustment, it can be commonly used to support various display units.

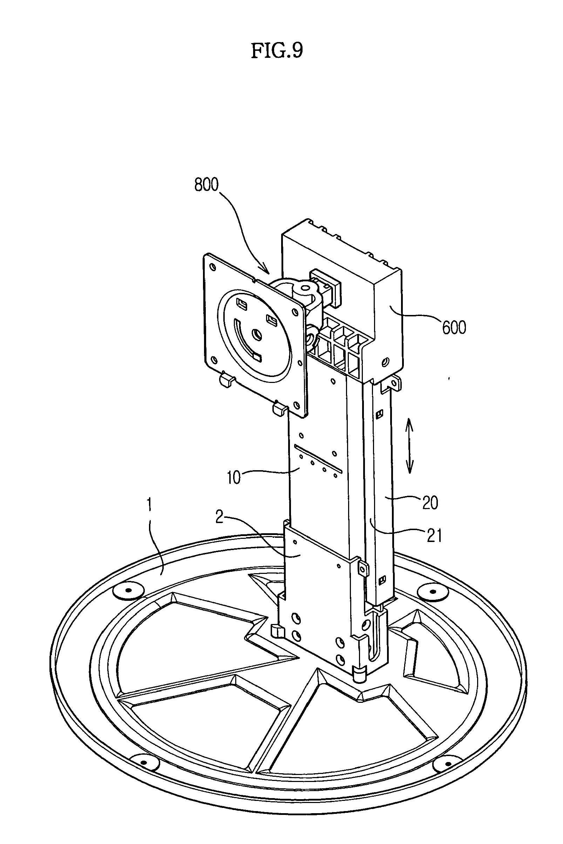

FIG. 1 shows one embodiment of the supporting device for the display unit, which has the upper-side supporting member 60 installed at the upper end of the elevation member 20, and allows the plurality of display units to be mounted on the upper-side supporting member 60. However, the present invention is not limited to this construction, and can be applied to the case where a single display unit is mounted on the upper portion of the elevation member 20 as shown in FIG. 9. In FIG. 9, the supporting device comprises an upper-side supporting member 600 positioned at an upper end of the elevation member 20, and a single connecting device 800 which mounts the single display unit to the upper-side supporting member 600.

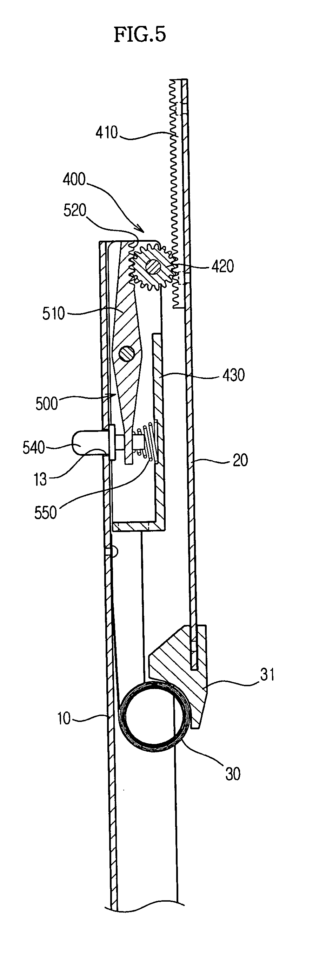

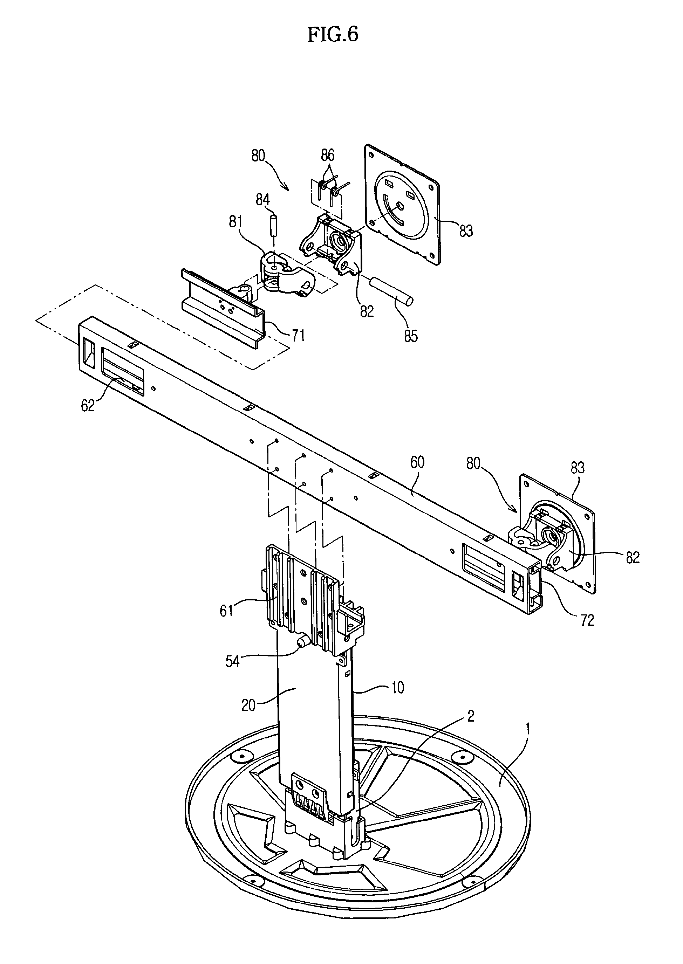

FIG. 5 is a cross-sectional view illustrating another embodiment of a height adjustor 400 of the supporting device for the display unit consistent with the present invention. Unlike height adjustor shown in FIG. 1, in the height adjustor 400 of the embodiment shown in FIG. 5, a rack gear 410 is installed to the elevation member 20, and a pinion gear 420, a restriction unit 500 and a support bracket 430 are installed to the stationary member 10. The pinion gear 420 is rotatably coupled to an upper portion of the support bracket 430 so as to engage with the rack gear 410, and is installed such that a gear part 520 of a lever 510 rotatably coupled to the support bracket 430 engages with the pinion gear 420. An operating part 540 of the lever 510 is protruded at the front of the stationary member 10 through a hole 13 formed in the stationary member 10, and an elastic member 550 supports the end of the lever 510 at a side of the operating part 540. In this embodiment, the rack gear 410 is lifted via a lifting behavior of the elevation member 20, causing the pinion gear 420 mounted to the stationary member 10 to rotate without being lifted or lowered. The pinion gear 420 is restricted or released according to operation of the restriction unit 500. Accordingly, the height adjustor 400 of this embodiment operates with the substantially same function as that of the height adjustor 40 described above. As shown in FIGS. 1 and 6, in both embodiments, the upper-side supporting member 60 is mounted on the upper portion of the elevation member 20. The upper-side supporting member 60 extends in the horizontal direction, and has a middle portion secured to the upper end of the elevation member 20 via a connecting member 61. Although the upper-side supporting member 60 is described as being secured by the upper-side connecting member 61 in the embodiment of FIG. 1, the upper-side supporting member 60 can be directly coupled to the upper end of the elevation member 20.

As shown in FIG. 1, the upper-side supporting member 60 is provided with a guide rail 62, which extends in the longitudinal direction and has first and second movable members 71 and 72 installed at both sides of the guide rail 62 so as to move in the horizontal direction with the display units mounted thereon. The first and second movable members 71 and 72 are slidably coupled to the guide rail 62 so as to move in the horizontal direction. The first and second movable members 71 and 72 are provided with connecting devices 80 which connect the display units thereto, respectively.

As shown in FIG. 6, each of the connecting devices 80 is constructed to be hinged and rotated in order to adjust installation angle and direction of the display unit according to the needs of the user. To this end, the connecting device 80 comprises a first connecting member 81 connected with an associated one of the first and second movable members 71 and 72 via a first connecting pin 84 so as to be hinged left and right, a second connecting member 82 connected with the first connecting member 81 via a second connecting pin 85 so as to be hinged up and down, and a third connecting member 83 rotatably connected at its center with the second connecting member 82. In order to prevent a portion coupled to the second connecting pin 85 from being elongated due to the weight of the display unit, a torsion spring 86 is provided to this portion, and supports the second connection member 82 to rotate it upwardly.

With this structure, the connecting devices 80 can realize a swivel function to adjust the left and right installation angles of a display screen, a tilt function to adjust a slant of the display screen, and a pivot function to pivot the display screen.

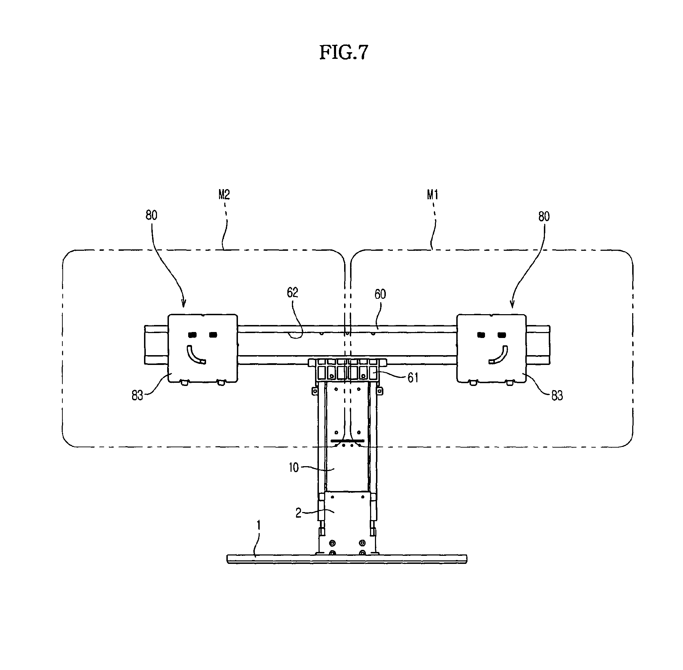

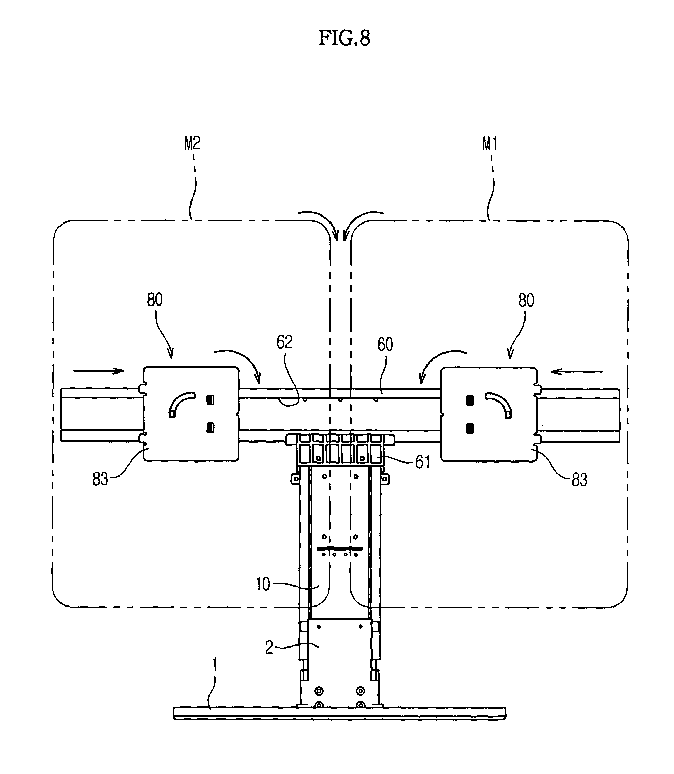

The pivot function to pivot display units M1 and M2 can be realized as shown in FIGS. 7 and 8. Specifically, the connecting devices 80 can be used to allow screens of the display units M1 and M2 to be laid horizontally, as shown in FIG. 7, or to be stood vertically, as shown in FIG. 8. When using the display units after changing directions of the screens as described above, it is necessary to adjust a distance between the display units M1 and M2. The distance between the display units M1 and M2 can be adjusted by moving the display units M1 and M2 in the horizontal direction. According to the present invention, since the first and second movable members 71 and 72 can be moved in the horizontal direction along the guide rail 62 of the upper-side supporting member 60, the distance between the display units M1 and M2 can be easily adjusted.

As apparent from the above description, consistent with the present invention, height adjustment of the display unit can be performed with ease and accuracy through the structure of the supporting device wherein a pinion gear moves and rotates along a rack gear to lift or lower an elevation member, and the structure wherein the pinion gear can be easily restricted at any desired position to maintain the adjusted height of the elevation member.

In addition, consistent with the present invention, when mounting a display unit that is heavier or lighter than the standard display unit on the supporting device according to the needs of the user, the adjusted height can be maintained with stability through the structure wherein the pinion gear is restricted by means of a restriction unit after adjusting the height of the elevation member.

In addition, consistent with the present invention, a plurality of display units can be mounted on the supporting device by means of the upper-side supporting member, and can be easily adjusted in distance therebetween, if necessary, through the structure wherein first and second movable members can be moved in the horizontal direction along the guide rail.

Furthermore, consistent with the present invention, installation angles and directions of the display units can be freely adjusted by means of the connecting devices which are mounted to the movable members to connect the display units, and have the swivel function, tilt function and pivot function.

Although a few exemplary embodiments of the present invention have been shown and described, it would be appreciated by those skilled in the art that various modifications, additions and substitutions may be made in these embodiments without departing from the principle and spirit of the invention, the scope of which is defined in the claims and their equivalents.

## Claims

1. A supporting device for display units, comprising a stationary member secured to a base, and an elevation member coupled to the stationary member so as to be raised or lowered to support the display unit and adjust a height thereof, the supporting device further comprising:
a rack gear secured to the stationary member;
a pinion gear disposed on the elevation member so as to engage with the rack gear; and
a restriction unit disposed on the elevation member to restrict or allow rotation of the pinion gear.

2. The supporting device according to claim 1, wherein the restriction unit comprises a lever coupled to the elevation member and having a gear part to restrict the pinion gear, an operating part positioned opposite to the gear part of the lever, and an elastic member to press the lever to cause the gear part of the lever to operate in a direction of restricting the pinion gear.

3. The supporting device according to claim 2, wherein the lever is installed such that, when pressing the operating part, the gear part is separated from the pinion gear.

4. The supporting device according to claim 2, further comprising:
a lift spring installed between the stationary member and the elevation member to impart lifting force to the elevation member.

5. The supporting device according to claim 4, wherein the lift spring comprises a spiral spring having one end secured to the stationary member, and the elevation member is provided with a spring latching member to allow the spiral spring to be wound or unwound according to a lifting or lowering behavior of the elevation member.

6. The supporting device according to claim 1, further comprising:
an upper-side supporting member mounted to an upper portion of the elevation member and extending in a horizontal direction;
a guide rail extending in a longitudinal direction on the upper-side supporting member;
first and second movable members positioned at both sides of the upper-side supporting member to move along the guide rail, respectively; and
connecting devices, each having a hinging part and a rotating part to adjust an installation angle of the display unit, installed to the first and second movable members, respectively.

7. The supporting device according to claim 5, wherein each of the connecting devices comprises a first connecting member connected with an associated one of the first and second movable members so as to be hinged left and right to obtain a swivel function, a second connecting member connected with the first connecting member so as to be hinged up and down to obtain a tilting function, and a third connecting member rotatably connected with the second connecting member to obtain a pivot function.

8. The supporting device according to claim 1, further comprising:
an upper-side supporting member mounted to an upper portion of the elevation member and extending in a horizontal direction; and
a connecting device having a hinging part and a rotating part to adjust an installation angle of the display unit installed to the upper-side supporting member.

9. A supporting device for display units, comprising a stationary member secured to a base, and an elevation member coupled to the stationary member so as to be raised or lowered to support the display unit and adjust a height thereof, the supporting device further comprising:
a rack gear secured to the elevation member;
a pinion gear disposed on the stationary member so as to engage with the rack gear; and
a restriction unit disposed on the stationary member to restrict or allow rotation of the pinion gear.

10. The supporting device according to claim 9, wherein the restriction unit comprises a lever coupled to the stationary member and having a gear part to restrict the pinion gear; an operating part positioned opposite to the gear part of the lever; and an elastic member to press the lever to cause the gear part of the lever to operate in a direction of restricting the pinion gear.

11. The supporting device according to claim 10, wherein the lever is installed such that, when pressing the operating part, the gear part is separated from the pinion gear.

12. The supporting device according to claim 10, further comprising:
a lift spring installed between the stationary member and the elevation member to impart lifting force to the elevation member.

13. The supporting device according to claim 9, further comprising:
an upper-side supporting member mounted to an upper portion of the elevation member and extending in a horizontal direction;
a guide rail extending in a longitudinal direction on the upper-side supporting member;
first and second movable members positioned at both sides of the upper-side supporting member to move along the guide rail, respectively; and
connecting devices, each having a hinging part and a rotating part to adjust an installation angle of the display unit, installed to the first and second movable members, respectively.

14. The supporting device according to claim 9, further comprising:
an upper-side supporting member mounted to an upper portion of the elevation member and extending in a horizontal direction; and
a connecting device having a hinging part and a rotating part to adjust an installation angle of the display unit installed to the upper-side supporting member.
